(19) Europäisches Patentamt
European Patent Office
Office européen des brevets

(11) **EP 2 362 251 B1**

(12) **EUROPEAN PATENT SPECIFICATION**

(45) Date of publication and mention
of the grant of the patent:
**26.04.2023   Bulletin 2023/17**

(51) International Patent Classification (IPC):
**G02B 6/036** (2006.01)     **G02B 6/028** (2006.01)

(52) Cooperative Patent Classification (CPC):
**G02B 6/0288; G02B 6/03627; G02B 6/03633;
G02B 6/0365**

(21) Application number: **11155465.5**

(22) Date of filing: **22.02.2011**

(54) **OPTICAL FIBERS WITH TRUNCATED CORES**

OPTISCHE FASERN MIT VERKÜRZTEN KERNEN

FIBRES OPTIQUES AVEC DES COEURS TRONQUÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2010   US 306607 P**

(43) Date of publication of application:
**31.08.2011   Bulletin 2011/35**

(73) Proprietor: **OFS Fitel, LLC
Norcross, GA 30071 (US)**

(72) Inventors:
• **Jiang, Xinli
Shrewsbury, MA 01545 (US)**
• **Kim, Jinkee
Norcross, GA 30092 (US)**
• **Oulundsen, George
Belchertown, MA 01007 (US)**
• **Sun, Yi
Sunwanee, GA 30024 (US)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**EP-A2- 2 299 303        JP-A- 8 304 636
US-A1- 2008 166 094**

• **JACOMME L: "Modal dispersion in multimode
graded-index fibers", APPLIED OPTICS,
OPTICAL SOCIETY OF AMERICA, vol. 14, no. 11,
1 November 1975 (1975-11-01), pages 2578-2584,
XP001623442, ISSN: 0003-6935**

## Description

### Related Applications

This application claims priority from Provisional Application No. 61/306,607 filed February 22, 2010. It is also related to patent application Serial Number 12/583212, filed August 17, 2009.

### Field of the invention

The invention described and claimed in this application relates to multimode optical fibers designed for exceptional bend loss and modal dispersion characteristics.

### Background of the invention

The tendency of optical fibers to leak optical energy when bent has been known since the infancy of the technology. It is well known that light follows a straight path but can be guided to some extent by providing a path, even a curved path, of high refractive index material surrounded by material of lower refractive index. However, in practice that principle is limited, and optical fibers often have bends with a curvature that exceeds the ability of the light guide to contain the light.

Controlling transmission characteristics when bent is an issue in nearly every practical optical fiber design. The initial approach, and still a common approach, is to prevent or minimize physical bends in the optical fiber. While this can be largely achieved in long hauls by designing a robust cable, or in shorter hauls by installing the optical fibers in microducts, in all cases the optical fiber must be terminated at each end. Thus even under the most favorable conditions, certain bending can be encountered at the optical fiber terminals.

Controlling bend loss can also be addressed by the physical design of the optical fiber itself. Thus, ring features or trench features, or combinations thereof, are commonly found at the outside of the optical fiber refractive index profiles to control bend losses. See for example, United States Patents 4,691,990 and 4,852,968, and United States Patent Application Serial No. 12/583212, filed August 17, 2009.

In a conventional graded index multimode fiber, high order modes suffer greater loss than low order modes when the fiber is bent. In bend-optimized multimode fiber designs (BOMMF), a trench is located at the outer edge of the graded index core to minimize the bend loss of high order modes. As is well known in this art, a trench refers to an annular region of depressed index located in, and part of, the cladding region.

In typical optical fiber designs in which a negative trench is used to aid in controlling bend loss the negative trench is spaced from the edge of the alpha profile of the core by a shoulder. Typically the shoulder is silica (refractive index delta of zero). The width of the shoulder is a design variable used in combination with other design parameters to modify fiber characteristics. While these designs produce exceptional bend loss performance improvements are still sought.

US 2008/0166094 A1 discloses bend resistant multimode optical fibers. Multimode optical fibers disclosed herein comprise a core region and a cladding region surrounding and directly adjacent to the core region, the cladding region comprising a depressed-index annular portion comprising a depressed relative refractive index.

JP 8 304636 A discloses an optical fiber. The refractive index distribution type optical fiber consists of a noncrystalline fluorine-contg. polymer which does not substantially contain C-H bonds as a matrix. The optical fiber consists of concentric two layers of an outer layer and an inner layer having refractive index distribution. The refractive index of the outer layer is made lower by $\geq 0.001$ than that of the outermost part of the inner layer. The inner layer shows such refractive index distribution that the refractive index changes from 1.36 to 1.34 in the radial direction from the center and shows an almost parabolic curve. The outer layer in contact with the inner layer can suppress leaking of light by the difference of the refractive index from the outermost part of the inner layer. The outer layer may be made of two or more layers as far as the refractive index of the outer layer is made lower by $\geq 0.001$ than the outermost part of the inner layer.

The publication "Modal dispersion in multimode graded-index fibers" by L. Jacomme, Applied Optics, Volume 14, No. 11, November 1975, discloses a complete analysis of the propagation characteristics of a ray through an axially symmetric graded-index medium. Two constants of the motion are shown to exist for a ray propagating in an infinite medium. These constants of the motion are shown to be invariant when reflection occurs in the core-cladding interface of cladded graded index fibers. This conservation allows the study of the propagation characteristics of a ray through a fiber even though its trajectory may be discontinuous because of reflection at the core-cladding interface.

### Statement of the Invention

We have discovered that the width of the shoulder or ledge may advantageously go to zero and with additional modifications to the profile one can maintain good bend loss performance with or without a trench. That discovery leads to a new and broad optical fiber design concept involving shifting the refractive index profile up so that the entire profile, including the trench, can be positive. The function formerly assigned to the trench feature may now be considered as part of the positive index core. In this design the core performs as not only as the primary light guiding structure, but now also functions essentially the same as that of a trench structure. What was formally a trench can now be much less negative or even positive. An optical fiber core having an alpha profile inner portion and a steep vertical step between the core and the cladding with no shoulder is referred to herein as a truncated core.

**Brief Description of the Drawing**

Fig. 1 is a plot showing a refractive index profile for a standard multimode optical fiber;

Fig. 2 is a similar plot for a multimode optical fiber having a trench to aid in bending performance;

Fig. 3 shows a refractive index profile for an optical fiber having a truncated core, according to the invention, for controlling bend performance;

Fig. 4 is a schematic representation of a refractive index profile with a truncated core and showing the parameters relevant to defining a truncated core in accordance with one aspect of the invention;

Fig. 5 shows a refractive index profile for an optical fiber having a modified truncated core, not according to the claimed invention.

Fig. 6 shows a DMD trace from 0~28 micron radius position for the optical fiber design of Fig. 3;

Fig. 7 shows a refractive index profile for an optical fiber not according to the claimed invention, having a truncated core modified by the addition of a ledge;

Fig. 8 shows Bit Error Rate (BER) waterfall curves for a truncated core optical fiber operating over a 300m and 550m optical link; and

Fig. 9 is a schematic representation of a transmission link using optical fibers with truncated cores according to the present disclosure.

**Detailed Description**

Bend loss occurs in both single mode and multimode optical fibers. Multimode optical fibers typically are used in communications over shorter distances such as in data centers, enterprise LAN, SAN, etc. The advantage of multimode fiber lies largely in the ability to couple this fiber with simple and cost effective sources. In the past these sources were mainly LEDs with a wavelength around 850 or 1300-nm. In the last decade, low cost Vertical Cavity Surface Emitting Laser (VCSEL) laser diodes with vertical resonators have become commercially widespread. These lasers enable effective coupling between the laser diode and optical fibers and also are capable of very high modulation rates, e.g., up to 10.3125Gbps. For 40/100-GBE multimode fiber applications like high performance in computing, data center and SAN applications, IEEE Std. 802.3ba™-2010 proposes standards for parallel VCSEL arrays, (4 and 10 channels) with individual channel rates of 10.3125Gbps,.

Performance issues for optical fibers under bent conditions have generally been considered to involve generalized optical power loss, due to leakage of light from the optical fiber at the location of the bend. The influence of modal structure changes on bend loss is generally overlooked.

In single mode optical fibers general power loss is the primary consideration, since all leakage involves light in the fundamental mode of the optical fiber. However, in multimode optical fiber the higher order modes suffer more loss than lower order modes due to differential effective refractive index. Also, the combination of higher order and lower order modes in a multimode optical fiber determines the bandwidth, and thus the signal carrying capacity, of the optical fiber.

For high bandwidth, the group velocities of the various modes in multi-mode fibers should be as close to equal as possible. The differential group velocities can be controlled by grading the refractive index of the material comprising the core, which means specifying a functional form of the index as a function of the fiber radius. In a conventional multimode fiber, the design goal has been to achieve an $\alpha$-shape, which is defined as:

$$n(r) = [n_1^2 - ( n_1^2 - n_{clad}^2 ) ( r/R_0)^\alpha]^{1/2} \qquad (1)$$

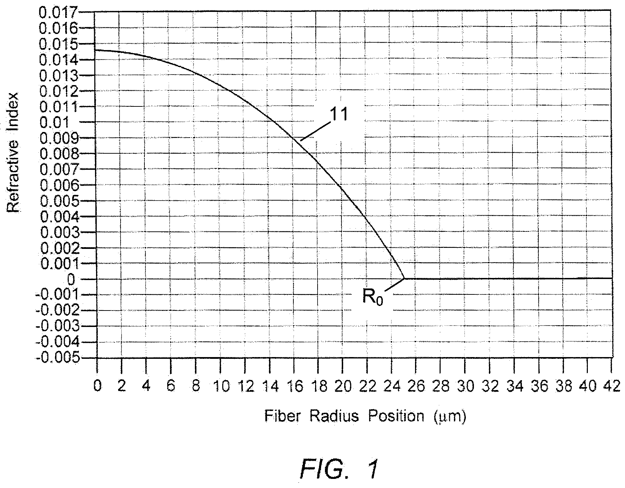

where r is the radius of the fiber, $R_0$ is the radius of the core, $n_{clad}$ is the refractive index of the cladding, $n_1$ is refractive index at the center of core (r =0) and $\alpha$ is the power law profile parameter. This is the "ideal" $\alpha$-shape (alpha core) profile, as used in the industry, where $\alpha$ has a value typically of 1.8 to 2.2. Fig. 1 illustrates a typical refractive index profile for a multimode optical fiber (MMF) with an alpha core 11. The alpha core extends radially out to $R_0$. $R_0$ is the point where the power law curve intersects zero delta refractive index.

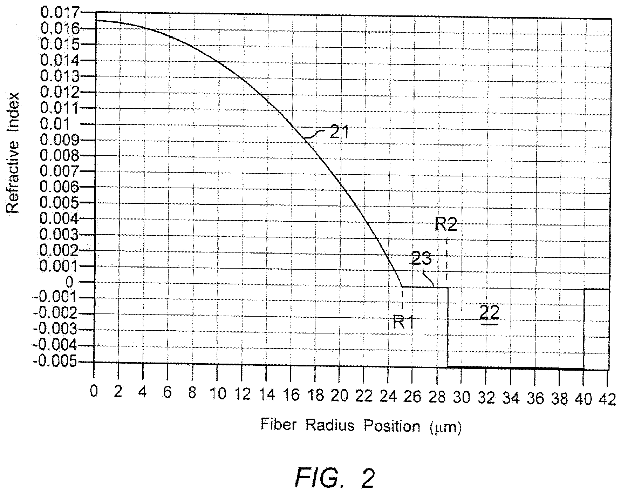

Improvement in bend loss characteristics may be achieved by adding a trench to the refractive index profile. A trench is a down doped region, typically a fluorine doped region, with refractive index lower than pure silica, usually referred to as negative delta refractive index. Fig. 2 shows a refractive index profile for a MMF having an alpha core 21 having a radius $R_1$ from the center of the core, but with a trench 22 added to control bending loss. Between the trench and the alpha core is a shoulder 23 extending to a radius $R_2$ from the core center.

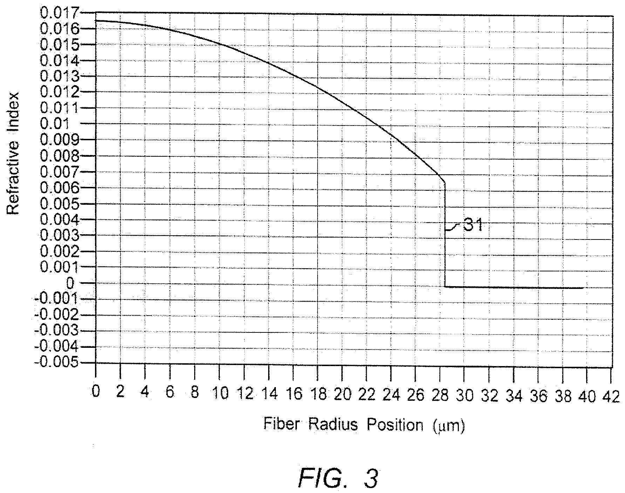

In the design of Fig. 2, compared with a conventional MMF (as shown in Fig. 1), the high order modes are influenced by the trench and effectively experience greater refractive index difference than in the case of a conventional MMF. It has been discovered that the trench 22 in the design of Fig. 2 is not necessary and can be eliminated. This produces the truncated core design that is characteristic of the invention. Fig. 3 shows a refractive index profile in which the core is truncated, resulting in a large vertical step 31. The step 31 serves the same function as the trench in the design of Fig. 2, that is, step 31 creates a large refractive index difference between the core light guiding portion of the fiber and the cladding. Among the advantages of this design is simplicity in fabrication, an advantage obtained by eliminating any negative refractive index regions.

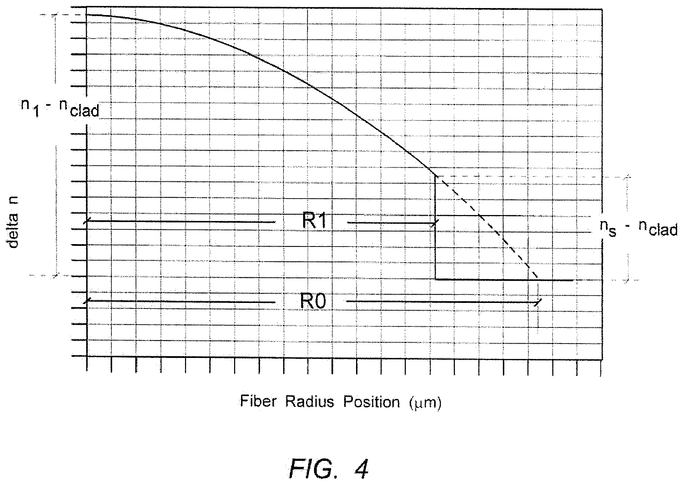

The parameters used to define the truncated core are illustrated in Fig. 4. $R_0$ was defined earlier. $R_1$ is the physical core radius, i.e., the point where the core refractive index steps down from $n_s$ to the refractive index of the cladding region, $n_{clad}$. Refractive index delta n is the departure of the refractive index from $n_{clad}$. Refractive index $n_s$ is the index where the step begins, and $n_s - n_{clad}$ defines the step height in terms of refractive index delta. An aspect of the invention includes the cladding being made of silica, possibly doped or undoped. In such an instance the refractive index $n_{clad}$ would be approximately the same as that of the silica.

To replace the need for a trench, the height of the vertical step should be as large as a fraction of delta $n_1$ multiplied by $(n_1 - n_{clad})$. Specifically, the step height $n_s - n_{clad}$ should be at least 0.2 $(n_1 - n_{clad})$, and preferably at least 0.35 $(n_1 - n_{clad})$. For example, Fig. 3 shows a step height is 0.4 $(n_1 - n_{clad})$.

Suitable design parameters for the example of Fig. 3, and, for comparison, the examples illustrated in Figs. 1 and 2, are given in Table I.

TABLE 1

| Design | Fig. 1 | Fig. 2 | Fiq. 3 |
|---|---|---|---|
| Description | Conventional MMF | MMF with trench and shoulder | MMF with truncated core and vertical step |
| Graded index core diameter ($\mu$m) | 50 | 50 | 57.2 |
| Core Index | 0.0167 | 0.0145 | 0.0167 |
| Inner Wall diameter of trench ($\mu$m) | 50 | 57.8 | 57.2 |
| Delta n of Step or Trench | 0 | -0.005 | 0.006 |

For the design of Fig. 3, the refractive index profile can be expressed generally as:

$$n(r) = \begin{cases} [\, n_1^2 - (\, n_1^2 - n_{clad}^2 \,)\,(\, r/R_0)^\alpha]^{1/2} & \text{where } r < R_1 \\ n_{clad} & \text{where } r > R_1 \end{cases} \qquad (2)$$

In this expression $n_1$ is the refractive index at r = 0, $n_{clad}$ is the refractive index of the cladding, and $\alpha$ is the power law profile parameter. $R_0$ is the radius position where $n(R_0) = n_{clad}$.

$R_1$ in the equation above can be determined by:

$$R_1 = R_0 *[(n_1^2 - n_s^2)/ (n_1^2 - n_{clad}^2)]^{1/\alpha}$$

where $n_s$ is the maximum refractive index of the step between core and cladding.

An embodiment of the claimed invention includes delta $n_1$ falling between 0.014 and 0.02.

In these designs the value of $R_1$ is in the range 10-34 microns.

Table II shows the macro bend loss at 850 nm of the 3 designs shown in FIG. 1, 2 and 3. The bend loss of the multimode optical fibers were measured by wrapping 2 meter fiber samples around either 10 mm, 15 mm or 30 mm diameter mandrels designated 10D, 15D and 30D respectively, using 2.5 turns or 10.5 turns designated as 2.5T or 10.5T respectively.

TABLE II

|  | 10D2.5T | 10D10.5T | 15D2.5T | 15D10.5T | 30D2.5T | 30D10.5T |
|---|---|---|---|---|---|---|
| FIG. 1 (dB) | 2.060 | 2.976 | 1.154 | 1.891 | 0.129 | 0.260 |
| FIG. 2 (dB) | 0.459 | 0.981 | 0.130 | 0.244 | 0.019 | 0.028 |
| FIG. 3 (dB) | 0.546 | 0.829 | 0.164 | 0.249 | 0.016 | 0.022 |

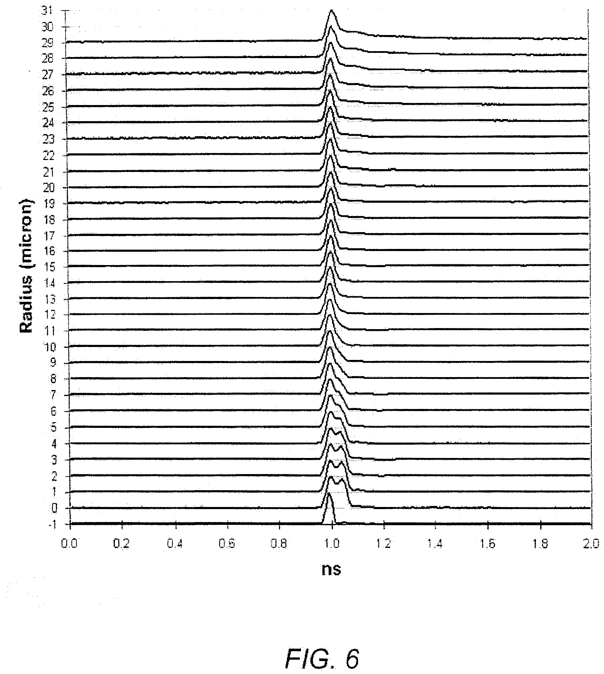

A 430-meter sample of the design of FIG. 3 was tested on a HR-DMD bench. FIG. 6 shows the DMD trace from 0~28 micron radius position. Table III lists the DMD mask width and Effective Modal Bandwidth (EMB) values, which exceed the standards for OM3 specifications.

TABLE III

| MW18 (ps/m) | 0.136 |
|---|---|
| MW23 (ps/m) | 0.136 |
| SLW (ps/m) | 0.106 |
| MinEmbc (MHz_km) | 3896 |

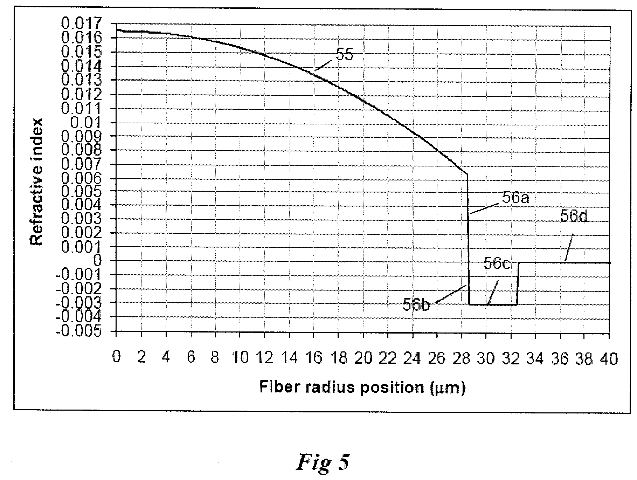

An alternative embodiment not according to the claimed invention is shown in Fig. 5. The alpha portion of the refractive index profile is shown at 55. The large step comprises a positive index portion 56a and a negative index portion 56b. The negative index portion 56b represents an enhancement to the large step 56a, and in some cases may further improve the bend performance of the design. In the typical truncated core design, the measured fiber core diameters (based on FOTP-176) are usually 3~5 μm greater than the physical core diameter (based on a refractive near field profile for example). Adding a first cladding region and a second cladding region outside the first cladding region with an index greater than the first cladding region aids in depleting cladding modes and controlling the measured core diameter. Therefore, as shown in Fig. 5, the region 56c would have an index of $n_{clad1}$ which is less than the index of region 56d with an index of $n_{clad2}$. An inherent limitation of the alpha core profile design is that high order modes are not properly compensated due to the abrupt change in refractive index at the core-clad boundary and coupling to cladding modes at the edge of the core. Thus the modal delay of high order modes deviates from low order and medium order modes. For conventional ideal alpha core MMF, such as OM3 and OM4 fibers, the differential mode attenuation of high order modes is high, which minimizes impact of high order modes on differential mode delay and eventually bandwidth. (OM3 and OM4 are well known MMF types defined in the International Electrotechnical Commission (IEC) and the Telecommunications Industry Association (TIA).) In MMF designed for low bend loss, the interaction of the higher order modes with the trench or large step (i.e. essentially any large index difference at the core edge) not only improved fiber bend performance, but it also severely changed propagation characteristics of high order modes. Consequently, controlling the differential mode delay of the higher order modes in bend insensitive MMF becomes very important and is more challenging than in conventional MMF. Thus, methods of equalizing modal delay of high order modes are needed for bend insensitive MMF (BIMMF) used in high speed digital transmission. In the current state of the art, high speed transmission for optical data systems is generally considered to be 10 Gb/s or greater.

We discovered that two different approaches can be practiced to mitigate the impact of BIMMF with large index changes at the core edge on high order modes. The first approach involves locating the step away from the core area to be utilized. In the high speed digital transmission application, 0-23 micron range for DMD test is specified in standard TIA/EIA-455-220. Therefore, in approach one the step at R1 would need to be at least 4 microns greater than 23 microns to insure good DMD behavior. In the example of Figure 3, the radius position of the step 31 is chosen to be 28.6 micron. The DMD of the design, as shown in Fig. 6, illustrates that the step has very little impact on the 0-23 micron DMD value.

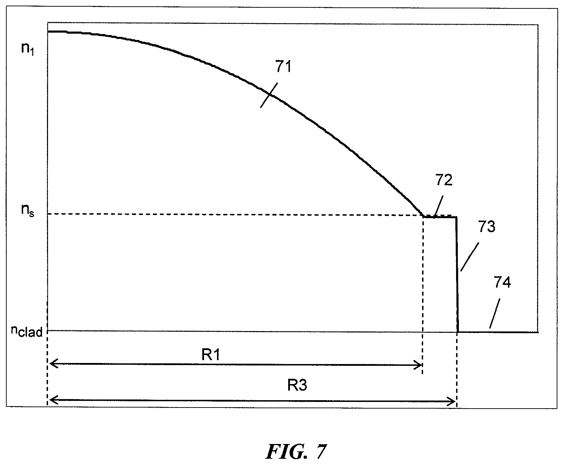

The second approach is to add a ledge with proper width between the core edge and the step to compensate the impact of the step. This is shown in Fig. 7. The alpha portion of the refractive index profile is designated 71, the step forming the truncated core edge 73, is shifted away from the core center by distance R3 - R1 to form ledge 72. Distance R3 - R1 is preferably in the range 1 to 4 microns. As shown, the first approach shown in Fig. 3 has no ledge and therefore R3-R1 would be zero.

The optical fiber designs described above are advantageously used in systems having Vertical Cavity Surface Emitting Lasers (VCSELs) as the optical source. Truncated core optical fibers coupled to VCSEL sources exhibit exceptional system performance as demonstrated in the following examples.

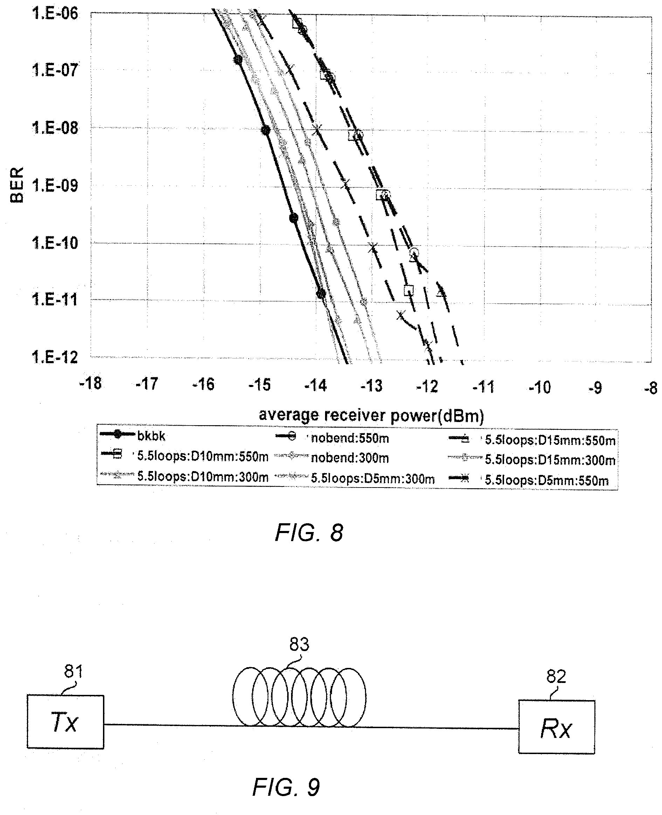

Fig. 8 shows Bit Error Rate (BER) waterfall curves for an optical fiber with a truncated core (Fig. 3) over a 300m and 550m optical link. The optical fiber has a 0-23 um DMD mask width value of 0.136 ps/m. The bit rate is 10.3125 Gbps, encoded with a pseudo-random bit sequence (PRBS) of $2^{31}$-1 (PRBS31). The VCSEL has a root mean square (RMS) spectral width of 0.24 nm and an encircled flux (EF) of 14% at 4.5um and 98% at 19 um. The BER waterfall curves show excellent performance over both 300 m and 550 m long transmission, with and without 5.5 loops of tight bends in the link at three different bending diameters,15 mm, 10 mm and 5 mm.

In addition to improved bending loss, as described above, optical fiber transmission performance is typically characterized also by channel insertion loss (CHIL) and dispersion power penalty (DSP). Channel insertion loss is defined as the summation of the attenuation, connector loss and bending loss when bending exists in the link length. These three parameters of merit are summarized in the Table IV. The data is given for the VCSEL source just described as well as for a system comprising a truncated core optical fiber (like one shown in Fig. 3) coupled to a VCSEL with a RMS spectral width of 0.38 nm and EF of 8.5% at 4.5um and 95% at 19um.

TABLE IV

| | length | bending diameter | CHIL (dB) | 5.5 loops bending loss (dB) | DSP (dB) | Total (dB) |
|---|---|---|---|---|---|---|
| **VCSEL (RMS~0.24nm, EF 14% at 4.5um and 98% at 19um)** | **300m** | **nobend** | **0.69** | **0** | **0.7** | **1.39** |
| | | **15mm** | **0.78** | **0.09** | **0.5** | **1.28** |
| | | **10mm** | **0.86** | **0.17** | **0.1** | **0.96** |
| | | **5mm** | **1.73** | **1.04** | **0** | **1.73** |
| | **550m** | **nobend** | **1.24** | **0** | **2.1** | **3.34** |
| | | **15mm** | **1.3** | **0.06** | **1.8** | **3.1** |
| | | **10mm** | **1.36** | **0.12** | **1.5** | **2.86** |
| | | **5mm** | **2.17** | **0.93** | **1.3** | **3.47** |
| **VCSEL (RMS~0.38nm, EF 8.5% at 4.5um and 95% at 19um)** | **300m** | **nobend** | **0.68** | **0** | **2** | **2.68** |
| | | **15mm** | **0.74** | **0.06** | **1.8** | **2.54** |
| | | **10mm** | **0.89** | **0.21** | **1.4** | **2.29** |

Fig. 9 is a schematic representation of a transmission link between laser transmitter 81 and optical receiver 82 using optical fiber 83 having a design according to the present disclosure.

In concluding the detailed description, it should be noted that it will be obvious to those skilled in the art that many variations and modifications may be made to the preferred embodiment without substantial departure from the principles of the present claimed invention.

**Claims**

**1.** A multi-mode optical fiber comprising in cross section:

a truncated core,
an un-doped cladding surrounding and in contact with the core, the cladding having a refractive index $n_{clad}$,
wherein the cladding consists essentially of pure silica,
wherein the truncated core comprises:

a first portion (55, 71) extending from a center of the cross section to a radius $R_1$, having a refractive index

$n_1$ at the center of the cross section and a refractive index $n_s$ at Ri, wherein a refractive index profile of the first portion has an alpha core profile,
a step region (56a, 56b, 73) at $R_1$ having a refractive index difference approximately equal to $n_s - n_{clad}$, where $n_s - n_{clad}$ is at least 0.2 ($n_1 - n_{clad}$), and
where $n_1 - n_{clad}$ is in the range of 0.014 to 0.02 and $R_1$ is in the range of 10-34 microns.

2. The multi-mode optical fiber of claim 1 where $n_s - n_{clad}$ is at least 0.35 ($n_1 - n_{clad}$).

3. An optical system comprising:

a) a laser transmitter (81),
b) an optical receiver (82), and
c) the multimode optical fiber (83) of claim 1 coupled between the transmitter (81) and receiver (82).

4. The multimode optical fiber of claim 1 where the core has:

$$n(r) = n_1{}^2 - ( n_1{}^2 - n_{clad}{}^2 ) ( r/R_0)^\alpha]^{1/2},$$

when $r < Ri$, and;

$$n(r) = n_{clad}$$

when $r > R_1$, where r is the radius of the fiber, $R_0$ is the radius position where $n(R_0) = n_{clad}$, and $\alpha$ is a free parameter having a value in the range of 1.8 to 2.2.


**Patentansprüche**

1. Eine optische Mehrmodenfaser, die im Querschnitt folgende Merkmale aufweist:

einen kegelstumpfartigen Kern,
eine undotierte Umhüllung, die den Kern umgibt und mit demselben in Kontakt steht, wobei die Umhüllung einen Brechungsindex $n_{clad}$ aufweist, wobei die Umhüllung im Wesentlichen aus reinem Siliciumdioxid besteht, wobei der kegelstumpfartige Kern folgende Merkmale aufweist:

einen ersten Abschnitt (75, 71), der sich von einer Mitte des Querschnitts zu einem Radius $R_1$ erstreckt, mit einem Brechungsindex $n_1$ in der Mitte des Querschnitts und einem Brechungsindex $n_s$ bei $R_1$, wobei ein Brechungsindex-Profil des ersten Abschnitts ein Alphakern-Profil aufweist,
einen Stufenbereich (56a, 56b, 73) bei $R_1$, mit einer Brechungsindexdifferenz von ungefähr gleich $n_s - n_{clad}$, wobei $n_s - n_{clad}$ zumindest 0,2 ($n_1 - n_{clad}$) beträgt, und
wobei $n_1 - n_{clad}$ in dem Bereich von 0,014 bis 0,02 liegt und $R_1$ in dem Bereich von 10-34 $\mu$m liegt.

2. Die optische Mehrmodenfaser gemäß Anspruch 1, wobei $n_s - n_{clad}$ zumindest 0,35 ($n_1 - n_{clad}$) beträgt.

3. Ein optisches System, das folgende Merkmale aufweist:

a) einen Lasersender (81),
b) einen optischen Empfänger (82), und
c) die optische Mehrmodenfaser (83) gemäß Anspruch 1, die zwischen den Sender (81) und den Empfänger (82) gekoppelt ist.

4. Die optische Mehrmodenfaser gemäß Anspruch 1, bei der der Kern Folgendes aufweist:

$$n(r) = n_1{}^2 - ( n_1{}^2 - n_{clad}{}^2 ) ( r/R_0)^\alpha]^{1/2},$$

wenn r < $R_1$, und;

$$n(r) = n_{clad}$$

wenn r > $R_1$, wobei r der Radius der Faser ist, $R_0$ die Radiusposition ist, wo $n(R_0) = n_{clad}$ ist, und $\alpha$ ein freier Parameter mit einem Wert in dem Bereich von 1,8 bis 2,2 ist.

## Revendications

1. Fibre optique multimode comprenant en section:

   un noyau tronqué,
   une gaine non dopée entourant et en contact avec le noyau, la gaine présentant un indice de réfraction $n_{clad}$,
   où la gaine est essentiellement réalisée en silice pure,
   dans laquelle le noyau tronqué comprend:

   une première partie (55, 71) s'étendant d'un centre de la section transversale à un rayon Ri, présentant un indice de réfraction $n_1$ au centre de la section transversale et un indice de réfraction $n_s$ à Ri, où un profil d'indice de réfraction de la première partie présente un profil de noyau alpha,
   une région étagée (56a, 56b, 73) à $R_1$ présentant une différence d'indice de réfraction environ égale à $n_s - n_{clad}$, où $n_s - n_{clad}$ est au moins 0,2 $(n_1 - n_{clad})$, et
   où $n_1 - n_{clad}$ se situe dans la plage de 0,014 et 0,02 et $R_1$ se situe dans la plage de 10 à 34 microns.

2. Fibre optique multimode selon la revendication 1, dans laquelle $n_s - n_{clad}$ est au moins 0,35 $(n_1 - n_{clad})$.

3. Système optique comprenant:

   a) un émetteur laser (81),
   b) un récepteur optique (82), et
   c) la fibre optique multimode (83) selon la revendication 1 couplée entre l'émetteur (81) et au récepteur (82).

4. Fibre optique multimode selon la revendication 1, dans laquelle le noyau présente:

$$n(r) = n_1{}^2 - (n_1{}^2 - n_{clad}{}^2) \ (r/R_0)^\alpha]^{1/2},$$

   lorsque r < Ri, et

$$n(r) = n_{clad}$$

   lorsque r > Ri, où r est le rayon de la fibre, $R_0$ est la position du rayon où $n(R_0) = n_{clad}$, et $\alpha$ est un paramètre libre présentant une valeur située dans la plage de 1,8 à 2,2.

FIG. 1

FIG. 2

FIG. 3

FIG. 4

*Fig 5*

FIG. 6

**FIG. 7**

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 61306607 A
- WO 12583212 A
- US 4691990 A
- US 4852968 A
- US 58321209
- US 20080166094 A1
- JP 8304636 A

**Non-patent literature cited in the description**

- **L. JACOMME.** Modal dispersion in multimode graded-index fibers. *Applied Optics,* November 1975, vol. 14 (11